# FASCICULE DE BREVET EUROPEEN

(11) **EP 3 022 031 B1**
(45) Date de publication et mention de la délivrance du brevet: **06.03.2019**
(21) Numéro de dépôt: 14738512.4
(22) Date de dépôt: 11.07.2014
(51) Int. Cl.: B29C 43/18, B29K 105/00, F16K 7/12, B29C 43/00, B29C 43/02, B29C 43/52, B29K 27/18, B29L 31/00

(54) **PROCÉDÉ DE MISE EN FORME D'UNE PLAQUE EN UN POLYTÉTRAFLUOROÉTHYLÈNE FRITTÉ ET RESTRUCTURÉ.**
VERFAHREN ZUM FORMEN EINER PLATTE AUS GESINTERTEM UND RESTRUKTURIERTEM POLYTETRAFLUORETHYLEN.
METHOD FOR SHAPING A BOARD MADE FROM A SINTERED AND RESTRUCTURED POLYTETRAFLUOROETHYLENE.

(30) Priorité: 15.07.2013 FR 1356947
(43) Date de publication de la demande: 25.05.2016
(73) Titulaire: Commissariat à l'Énergie Atomique et aux Énergies Alternatives, 75015 Paris (FR); Technetics Group France SAS, 42000 Saint-Etienne (FR)
(72) Inventeur: GUIMET, Laurent, F-42240 Unieux (FR); PARSY, Sophie, F-42600 Savigneux (FR); LEFRANCOIS, Michel, F-42000 Saint Etienne (FR)
(74) Mandataire: Brevalex
(86) Numéro de dépôt international: PCT/EP2014/064899
(87) Numéro de publication internationale: WO 2015/007634

(56) Documents cités:
- DE-A1- 2 253 589
- FR-A1- 2 924 192
- US-A- 5 374 473
- US-A1- 2003 034 582

## Description

### DOMAINE TECHNIQUE

La présente invention se rapporte au domaine de la fabrication de pièces en polytétrafluoroéthylènes frittés et restructurés.

Plus spécifiquement, elle se rapporte à un procédé de mise en forme d'une plaque en un polytétrafluoroéthylène fritté et restructuré, c'est-à-dire à un procédé qui vise à transformer une plaque en un PTFE fritté et restructuré en une pièce de géométrie (forme et/ou dimensions) différente de celle que présente cette plaque.

Ce procédé peut notamment être mis à profit pour fabriquer des pièces en polytétrafluoroéthylènes frittés et restructurés qui, à l'instar des pièces en polytétrafluoroéthylènes frittés mais non restructurés que l'on trouve dans les membranes de vannes et de pompes à membrane, se présentent sous la forme de films dont au moins une partie n'est pas plane.

Aussi, l'invention se rapporte-t-elle aussi à un procédé permettant de fabriquer une pièce en un polytétrafluoroéthylène fritté et restructuré telle que définie ci-dessus.

Une pièce en un polytétrafluoroéthylène fritté et restructuré susceptible d'être obtenue par ce procédé est également décrite.

Une membrane de vanne ou pompe à membrane comprenant au moins une pièce en un polytétrafluoroéthylène fritté et restructuré telle que définie ci-dessus, ainsi qu'une vanne ou une pompe à membrane comprenant au moins une telle membrane sont en outre décrites.

L'invention trouve, en premier lieu, application dans le domaine de la fabrication de membranes de vannes et de pompes à membrane à usage industriel mais elle peut également trouver application dans tous les domaines où il peut être utile de disposer de pièces en PTFE frittés et restructurés non planes comme, par exemple, la fabrication de pièces membranaires typiquement destinées à des applications biomédicales.

### ÉTAT DE LA TECHNIQUE ANTÉRIEURE

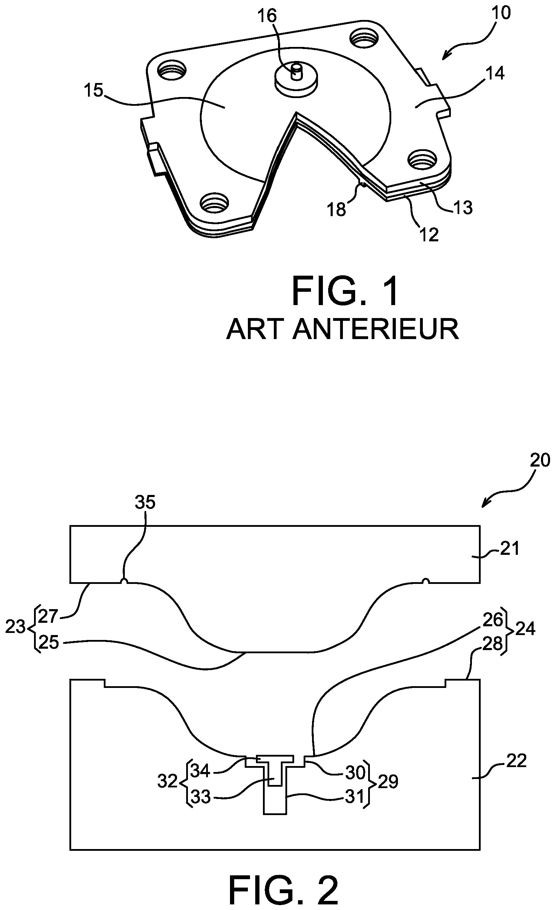

Comme visible sur la figure 1, qui illustre schématiquement un exemple typique de membrane 10 que l'on utilise dans les vannes et pompes à membrane, cette membrane comprend deux pièces superposées dont l'une, qui est référencée 12, est en polytétrafluoroéthylène (ou PTFE) tandis que l'autre, qui est référencée 13, est en un élastomère.

Les pièces 12 et 13, qui sont typiquement rectangulaires - comme illustré sur la figure 1 - mais qui peuvent également être circulaires, ont une partie périphérique 14 plane ou sensiblement plane et une partie centrale 15 en forme de dôme. La pièce 12 comprend de plus, sur sa face opposée à celle en contact avec la pièce 13 et sur la partie périphérique de cette face, un ou plusieurs bourrelets annulaires 18 qui sont destinés à assurer une étanchéité lorsque la vanne ou la pompe est en position fermée.

Les pièces 12 et 13 sont reliées en leur centre à un pion 16, classiquement métallique, qui permet à la partie centrale des pièces 12 et 13 - et donc à la partie centrale de la membrane 10 - de se déformer sous l'effet d'un actionneur (non représenté sur la figure 1), qui est, lui-même, relié au pion 16, et de passer d'une configuration convexe/concave à une configuration concave/convexe et inversement selon que la vanne ou la pompe est en position d'ouverture ou de fermeture.

La pièce 12 est classiquement fabriquée par frittage d'une poudre de PTFE sous haute pression et haute température.

Or, la tenue mécanique en flexion d'une pièce en PTFE fritté ainsi obtenue est assez limitée du fait de l'agencement anarchique des molécules de PTFE au sein de cette pièce. Ceci se traduit par une tendance à la fissuration de la pièce 12 lors des passages successifs de la partie centrale de la membrane de la configuration convexe/ concave à la configuration concave/convexe et inversement et, donc, à une usure relativement rapide de cette membrane.

Pour résoudre ce problème, il a été proposé dans la demande de brevet EP 0 704 024 de rendre mutuellement adhérentes les pièces 12 et 13 de manière à utiliser l'élastomère de la pièce 13 et son élasticité pour accompagner les mouvements de la pièce 12 et augmenter ainsi sa tenue mécanique en flexion. Pour assurer un maintien encore meilleur de la pièce 12, l'élastomère de la pièce 13 peut être renforcé par une grille en tissé qui est incorporée dans cette pièce lors de son moulage. Toutefois, l'expérience montre que ce type de construction ne donne pas en pratique satisfaction. En effet, une adhésion mutuelle des pièces 12 et 13 a pour effet de générer à l'interface de ces pièces des contraintes de cisaillement qui sont à l'origine de phénomènes de fissuration de la pièce 12.

Dans le brevet US 4,238,992, il a été proposé d'améliorer la flexibilité d'une membrane en PTFE de pompe pneumatique en munissant la partie de la membrane, sur laquelle s'exerce la pression d'air comprimé, d'une pluralité de bourrelets annulaires, faiblement espacés les uns des autres. Cette solution n'est pas non plus satisfaisante. En effet, le PTFE fritté a, par nature, un manque de cohésion interne qui le rend peu résistant aux sollicitations mécaniques dès que son épaisseur devient faible, ce qui est le cas dans les zones de la membrane situées entre les bourrelets. De plus, ces zones étant, par construction, des zones de forte flexion, des fissurations s'y produisent finalement rapidement.

Il n'existe donc pas à ce jour de solution permettant réellement d'améliorer la tenue mécanique en flexion des pièces en PTFE frittés qui sont utilisées dans la fabrication des membranes destinées aux vannes et pompes à membrane et, par là même, la longévité de ces membranes.

On connaît des PTFE frittés dits « restructurés » qui, tout en ayant les qualités propres aux PTFE frittés conventionnels et, notamment, une inertie chimique et une stabilité thermique, présentent une flexibilité, une résistance au fluage et une tenue mécanique en flexion nettement supérieures à celles de ces derniers. L'utilisation de ces PTFE frittés et restructurés dans la fabrication de membranes de vannes et pompes à membrane pourrait donc constituer une excellente solution pour augmenter la longévité de ce type de membranes.

Le problème est que les PTFE frittés et restructurés sont obtenus par un processus de fabrication spécifique comprenant une opération de calandrage qui permet de conférer aux molécules de PTFE un agencement dit « en couches croisées », à l'origine de leurs propriétés améliorées de flexibilité, de résistance au fluage et de tenue mécanique en flexion, mais qui s'oppose à la possibilité de fabriquer des pièces en PTFE frittés et restructurés autrement que sous la forme de plaques.

Les Inventeurs se sont donc fixé pour but de parvenir à réaliser des pièces en PTFE frittés et restructurés qui ne soient pas planes et qui puissent notamment présenter une forme analogue à celle que présentent typiquement les pièces en PTFE frittés qui entrent dans la constitution des membranes de vannes et de pompes à membrane.

Ils se sont aussi fixé pour but que ces pièces en PTFE frittés et restructurés puissent comporter sur l'une de leurs faces un ou plusieurs bourrelets similaires aux bourrelets d'étanchéité que présentent typiquement les pièces en PTFE frittés qui entrent dans la constitution des membranes de vannes et de pompes à membrane.

Ils se sont encore fixé pour but qu'il soit possible d'intégrer dans ces pièces en PTFE frittés et restructurés lors de leur fabrication un pion du type de celui que présentent typiquement les pièces en PTFE frittés qui entrent dans la constitution des membranes de vannes et de pompes à membrane.

Or, dans le cadre de leurs travaux, les Inventeurs ont constaté que contre toute attente, eu égard à la résistance au fluage élevée que présentent les PTFE frittés et restructurés, il est possible d'obtenir un fluage contrôlé d'un PTFE fritté et restructuré et de mettre à profit ce fluage pour transformer une plaque en PTFE fritté et restructuré en une pièce de géométrie différente, pouvant notamment comporter des reliefs tels que des bourrelets annulaires si on le souhaite, et lui adjoindre un insert tel qu'un pion si on le souhaite également.

Ils ont de plus constaté que, de manière étonnante, les propriétés mécaniques du PTFE fritté et restructuré de la pièce ainsi obtenue ne sont pas inférieures à celles du PTFE fritté et restructuré de la plaque dont elle est issue et sont même légèrement supérieures à celles de ce dernier.

Et c'est sur ces constatations qu'est basée la présente invention.

Il est à noter qu'il est connu par le brevet US 5,374,473 de fabriquer une pièce en un PTFE expansé et densifié à partir d'un PTFE expansé et poreux et de mettre en forme cette pièce en l'associant à une pièce en élastomère et en soumettant le composite ainsi obtenu à une compression dans un moule chauffé à une température de 170°C.

Il est également connu par la demande de brevet DE 2 253 589 de fabriquer une membrane en PTFE par compression d'une couche de poudre de PTFE de haute densité, suivie d'un frittage.

Il est aussi connu par la demande de brevet FR 2 924 192 de fabriquer une pièce en PTFE en agglomérant une poudre d'un PTFE à l'état natif ou ayant un taux de cristallinité proche d'un PTFE à l'état natif, puis en comprimant l'agglomérat pour souder les grains de poudre entre eux.

### EXPOSÉ DE L'INVENTION

L'invention a donc, en premier lieu, pour objet un procédé de mise en forme d'une plaque en un PTFE fritté et restructuré, lequel procédé comprend :
- le chauffage de la plaque à une température θ₁ au moins égale à la température de fusion d'un PTFE fritté ; et
- la mise en forme de la plaque ainsi chauffée par compression dans un moule de compression.

Ainsi, selon l'invention, la mise en forme d'une plaque en un PTFE fritté et restructuré est réalisée en portant cette plaque à une température égale ou supérieure à la température de fusion d'un PTFE fritté - ce qui permet de faire perdre au matériau sa structure cristalline et, par là même, sa résistance au fluage - et en soumettant la plaque ainsi chauffée à une compression dans un moule de compression.

Dans ce qui précède et ce qui suit, on entend par « *température de fusion d'un PTFE fritté* », la température de fusion que présente un PTFE obtenu par frittage d'une poudre de PTFE et n'ayant subi aucun traitement de restructuration, notamment de calandrage. Cette température de fusion est de 327°C.

Compte-tenu de la stabilité thermique que présentent les PTFE frittés et restructurés, le chauffage d'une plaque en PTFE fritté et restructuré induit un ramollissement et une forte tendance au fluage de ce matériau mais n'entraîne en aucun cas sa liquéfaction. La plaque en PTFE fritté et restructuré chauffée conserve donc une consistance solide et peut être facilement manipulée, voire transportée d'un équipement à un autre.

Il en résulte que le chauffage de la plaque peut être réalisé aussi bien hors du moule de compression dans lequel est cette plaque est mise en forme par compression que dans ce moule.

Dans tous les cas, on veillera, de préférence à ce que la température θ₁ ne dépasse pas 450°C et ce, afin d'éviter une déstructuration du PTFE fritté et restructuré.

Dans un premier mode de mise en oeuvre préféré du procédé de mise en forme selon l'invention, la plaque est chauffée hors du moule de compression dans lequel elle est mise en forme par compression, auquel cas le procédé comprend préférentiellement :
- l'introduction de la plaque dans un four préalablement chauffé à la température θ₁ et le maintien de la plaque dans le four ainsi chauffé pendant 10 minutes à 60 minutes ; puis
- le transfert de la plaque dans le moule de compression, ce moule étant préalablement chauffé à une température θ₂ qui est au moins égale à 200°C (de manière à maintenir à coeur le PTFE fritté et restructuré à un état semi-cristallin pendant la compression) mais qui est inférieure à la température de fusion du PTFE fritté, et la compression de la plaque dans le moule de compression ainsi chauffé pendant 5 minutes à 30 minutes, sous une pression allant de 50 MPa à 150 MPa.

À l'issue de quoi, la mise en forme de la plaque en PTFE fritté et restructuré est terminée et la pièce résultant de cette mise en forme peut être retirée du moule de compression.

Dans un deuxième mode de mise en oeuvre préféré du procédé de mise en forme selon l'invention, la plaque est chauffée dans le moule de compression dans lequel elle est mise en forme par compression, auquel cas le procédé comprend préférentiellement :
- l'introduction de la plaque dans le moule de compression, ce moule étant préalablement chauffé à la température θ₁, et la compression de la plaque dans le moule de compression ainsi chauffé sous une pression allant de 50 MPa à 150 MPa ; puis
- le refroidissement du moule de compression et le maintien de la plaque dans le moule de compression jusqu'à ce que la température de ce moule soit inférieure à la température de fusion du PTFE fritté.

À l'issue de quoi, la mise en forme de la plaque en PTFE fritté et restructuré est terminée et la pièce résultant de cette mise en forme peut être retirée du moule de compression.

Conformément à l'invention, le refroidissement du moule de compression peut être obtenu soit en laissant ce moule refroidir naturellement, une fois son chauffage arrêté, soit en facilitant ce refroidissement, par exemple, par injection d'un fluide de refroidissement dans un système permettant la circulation de ce fluide dans l'épaisseur des parois du moule de compression.

Il va de soi que, quel que soit le mode de mise en oeuvre du procédé de mise en forme selon l'invention, les paramètres opératoires tels que la température de chauffage du moule de compression, la pression appliquée lors de la compression et la durée de cette compression, seront avantageusement choisis en fonction du degré de transformation que l'on souhaite imposer à la plaque en PTFE fritté et restructuré, cette transformation pouvant notamment aller de la formation d'une simple ondulation à la formation d'une géométrie beaucoup plus complexe, avec réduction ou non d'épaisseur, présence ou non de reliefs, etc. À cet égard, ce choix pourra aisément être optimisé par un homme du métier après la mise en oeuvre de quelques tests de routine dans lesquels il pourra faire varier l'un ou plusieurs des paramètres opératoires mentionnés ci-dessus.

Conformément à l'invention, le procédé de mise en forme d'une plaque en PTFE fritté et restructuré peut *a priori* être mis en oeuvre pour tout type de plaque en PTFE fritté et restructuré.

De telles plaques sont notamment disponibles auprès de la société GARLOCK Sealing Technologies™ sous la référence commerciale GYLON™ et de la société TEADIT.

Comme précédemment mentionné, le procédé de mise en forme selon l'invention peut notamment être mis à profit pour fabriquer des pièces en PTFE frittés et restructurés qui se présentent sous la forme de films dont au moins une partie n'est pas plane.

Aussi, l'invention a-t-elle également pour objet un procédé de fabrication d'une pièce en forme de film dont au moins une partie n'est pas plane à partir d'une plaque en un PTFE fritté et restructuré, lequel procédé comprend la mise en forme de la plaque par un procédé tel que précédemment défini.

Conformément à l'invention, ce procédé est, de préférence, mis en oeuvre pour fabriquer une pièce qui présente une épaisseur inférieure à l'épaisseur de la plaque et/ou qui comprend une partie périphérique plane ou sensiblement plane et une partie centrale en forme de dôme.

Dans ce dernier cas, la pièce peut notamment comprendre un bourrelet annulaire, coaxial avec le dôme, sur au moins l'une de ses faces et/ou un pion qui est intégré au sommet du dôme.

La fabrication de cette pièce peut notamment être réalisée en utilisant le premier mode de mise en oeuvre préféré du procédé de mise en forme précédemment décrit, auquel cas on préfère :
- d'une part, que le four soit préalablement chauffé à une température (θ₁) allant de 365°C à 375°C et que la plaque soit maintenue dans le four ainsi chauffé pendant 10 minutes à 15 minutes ; et
- d'autre part, que le moule de compression soit préalablement chauffé à une température (θ₂) allant de 240°C à 280°C et que la plaque soit comprimée dans le moule de compression ainsi chauffé pendant 5 minutes à 10 minutes, sous une pression allant de 100 MPa à 150 MPa.

En variante, elle peut également être réalisée en utilisant le deuxième mode de mise en oeuvre préféré du procédé de mise en forme précédemment décrit, auquel cas on préfère :
- d'une part, que le moule de compression soit préalablement chauffé à une température (θ₁) allant de 330°C à 350°C et que la plaque soit comprimée dans le moule de compression ainsi chauffé sous une pression allant de 100 MPa à 150 MPa ; et
- d'autre part, que la plaque soit maintenue sous compression au moins jusqu'à ce que la température du moule de compression atteigne 200°C.

Ainsi, une pièce en un PTFE fritté et restructuré en forme de film dont au moins une partie n'est pas plane est susceptible d'être obtenue par un procédé de fabrication tel que précédemment défini.

Cette pièce peut être utilisée pour fabriquer une membrane de vanne ou pompe à membrane, qui comprend au moins une pièce en un PTFE fritté et restructuré telle que précédemment définie, ce PTFE fritté et restructuré ne comprenant aucune charge de renfort du type silice, graphite, sulfate de baryum, microsphères en verre ou analogue.

Un tel PTFE fritté et restructuré est, par exemple, disponible auprès de la société GARLOCK Sealing Technologies™ sous la référence commerciale GYLON™ Style 3522.

De préférence, cette membrane comprend, de plus, au moins une pièce en un élastomère, la pièce en PTFE fritté et restructuré et la pièce en élastomère étant superposées.

Cette pièce peut aussi être utilisée pour fabriquer une vanne ou une pompe à membrane, laquelle vanne ou pompe comprend au moins une membrane telle que précédemment définie.

### BRÈVE DESCRIPTION DES FIGURES

La figure 1, déjà commentée, illustre schématiquement un exemple typique d'une membrane de vanne ou de pompe à membrane.
La figure 2 illustre schématiquement, vu en coupe et en condition d'ouverture, un exemple de moule de compression permettant de fabriquer, conformément à l'invention, une pièce en un PTFE fritté et restructuré destinée à entrer dans la constitution d'une membrane de vanne ou de pompe à membrane du type de celle illustrée sur la figure 1.

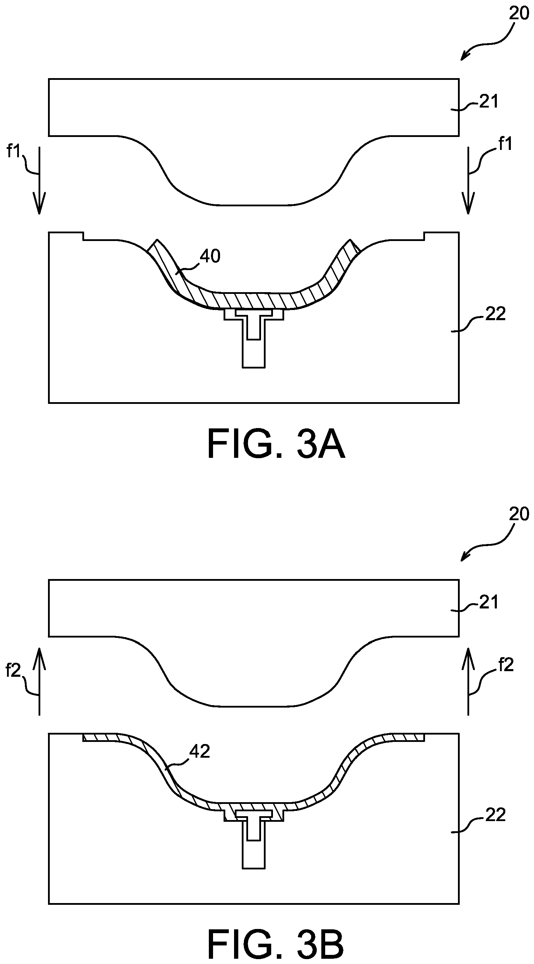

Les figures 3A et 3B illustrent schématiquement un exemple d'utilisation du moule de compression montré sur la figure 2 pour la fabrication, conformément à l'invention, d'une pièce en un PTFE fritté et restructuré destinée à entrer dans la constitution d'une membrane de vanne ou de pompe à membrane du type de celle illustrée sur la figure 1 ; la figure 3A montre une plaque en un PTFE fritté et restructuré, ayant été préalablement chauffée hors du moule de compression, après son transfert dans le moule de compression mais avant sa compression dans ce moule, tandis que la figure 3B montre la pièce en PTFE fritté et restructuré telle qu'obtenue après compression de la plaque dans le moule de compression mais avant le retrait de ladite pièce de ce moule.

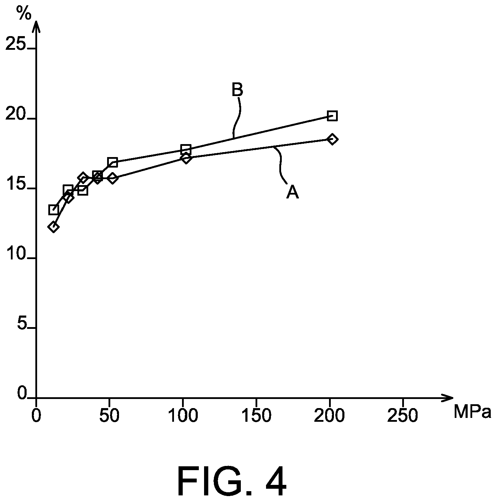

La figure 4 représente les valeurs d'allongement à la rupture, exprimées en %, en fonction de la contrainte de traction, exprimée en MPa, telles qu'obtenues lors d'essais de traction ayant été réalisés sur des échantillons d'une plaque en un PTFE fritté et restructuré (courbe A) et sur des échantillons d'une pièce résultant de la mise en forme de cette plaque par le procédé de mise en forme selon l'invention (courbe B).

### EXPOSÉ DÉTAILLÉ D'UN MODE DE MISE EN OEUVRE PARTICULIER

On se réfère tout d'abord à la figure 2 qui illustre schématiquement, vu en coupe et en condition d'ouverture, un exemple de moule de compression 20 permettant de fabriquer, conformément à l'invention, une pièce en un PTFE fritté et restructuré destinée à entrer dans la constitution d'une membrane de vanne ou de pompe à membrane du type de celle illustrée sur la figure 1.

Comme visible sur cette figure, le moule de compression 20 comprend un demi-moule supérieur 21 et un demi-moule inférieur 22 qui délimitent ensemble, en condition de fermeture, une cavité de forme et de dimensions conjuguées à celles de la pièce en PTFE fritté et restructuré que l'on souhaite fabriquer.

Ainsi, les surfaces, respectivement 23 et 24, des demi-moules 21 et 22 qui sont situées en vis-vis comprennent-elles une partie centrale, respectivement 25 et 26, qui est convexe pour le demi-moule supérieur 21 et qui est concave pour le demi-moule inférieur 22, ces parties centrales convexe et concave étant toutes deux de section horizontale circulaire. De plus, la surface 23 du demi-moule supérieur 21 comprend une partie périphérique 27 qui est plane tandis que la surface 24 du demi-moule inférieur 22 comprend une partie périphérique 28 qui est décalée vers le haut par rapport au bord de la partie centrale 26.

La partie périphérique 27 du demi-moule supérieur 21 comprend une rainure 35 annulaire, de même axe que le dôme formant la partie centrale de ce demi-moule, pour la formation sur la partie périphérique de la pièce d'un bourrelet d'étanchéité analogue au bourrelet 18 montré sur la figure 1.

De plus, pour l'intégration dans la pièce d'un pion analogue au pion 16 montré sur la figure 1, la partie centrale 26 du demi-moule 21 comprend, elle, un évidement de révolution 29 qui comporte une partie supérieure 30 et une partie inférieure 31 dont le diamètre est inférieur à celui de la partie supérieure 30. Un pion 32, comprenant une tige 33 axiale et une tête 34 située à l'extrémité supérieure de la tige 33, est logé dans l'évidement 29, la tige 33 se situant dans la partie inférieure 31 de cet évidement et la tête 34 se situant dans la partie supérieure 30 dudit évidement.

Les demi-moules 21 et 22 sont munis de moyens de chauffage (non représentés sur la figure 2) comme, par exemple, des résistances électriques qui sont logées dans les parois de ces demi-moules.

Ils peuvent également être munis de moyens de refroidissement (non représentés sur la figure 2) comme, par exemple, des moyens de circulation d'un fluide de refroidissement qui sont également logés dans leurs parois.

On se réfère à présent aux figures 3A et 3B qui illustrent schématiquement un exemple d'utilisation du moule de compression 20.

Comme visible sur la figure 3A, une plaque 40 en un PTFE fritté et restructuré, ayant été préalablement chauffée dans un four, par exemple à une température de 370°C pendant 10 minutes, est introduite dans le moule de compression 20 et déposée sur la partie centrale 26 du demi-moule inférieur 22.

Le moule de compression 20 est, lui-même chauffé, par exemple à une température de 240°C.

Après fermeture du moule de compression 20 (par déplacement du demi-moule supérieur 21 dans le sens des flèches f1), une pression, par exemple de 125 MPa, est appliquée sur le demi-moule supérieur 21, par exemple au moyen d'une presse (non représentée sur la figure 3A), et cette pression est maintenue, par exemple pendant 5 minutes.

Le traitement thermique auquel a été soumise la plaque 40 avant son transfert dans le moule de compression ayant fait perdre au PTFE fritté et restructuré sa structure cristalline et sa résistance au fluage, ce matériau flue fortement dans le moule de compression 20 jusqu'à occuper toute la cavité délimitée par les demi-moules 21 et 22, y compris la partie supérieure 30 de l'évidement 29. Il entoure ainsi la tête 34 du pion 32, ce qui permet l'insertion de ce pion dans le PTFE fritté et restructuré.

Après ré-ouverture du moule de compression 20 (par déplacement du demi-moule supérieur 21 dans le sens des flèches f2), on obtient la pièce en PTFE fritté et restructuré 42 montrée sur la figure 3B. Cette pièce peut alors être retirée de ce moule.

Des essais de traction ayant été réalisés sur des échantillons d'une plaque en un PTFE fritté et restructuré de 3 mm d'épaisseur (GYLON™ Style 3522) et sur des échantillons d'une pièce de 1,2 mm d'épaisseur résultant de la mise en forme de cette plaque par un procédé analogue à celui qui vient d'être décrit.

Les résultats de ces essais (valeurs d'allongement à la rupture, exprimées en %, en fonction de la contrainte de traction, exprimée en MPa) sont illustrés sur la figure 4, la courbe A correspondant aux résultats obtenus pour les échantillons de la plaque en PTFE fritté et restructuré et la courbe B correspondant aux résultats obtenus pour la pièce résultant de la mise en forme de cette plaque.

Cette figure montre que la raideur initiale du PTFE fritté et restructuré n'est pas diminuée par le procédé de mise en forme selon l'invention, contrairement à ce que l'on aurait pu craindre, et est même légèrement augmentée. Ainsi, le fluage contrôlé tel que mis en oeuvre selon l'invention semble permettre à un PTFE fritté et restructuré de conserver ses propriétés mécaniques d'origine, voire de les améliorer de manière sensible.

### RÉFÉRENCES CITÉES

Demande de brevet EP 0 704 024
Brevet US 4,238,992
Brevet US 5,374,473
Demande de brevet DE 2 253 589
Demande de brevet FR 2 924 192

## Revendications

1. Procédé de mise en forme d'une plaque en un polytétrafluoroéthylène fritté et restructuré, lequel procédé comprend :
- un chauffage de la plaque à une température θ₁ au moins égale à la température de fusion d'un polytétrafluoroéthylène fritté ; et
- une mise en forme de la plaque ainsi chauffée par compression dans un moule de compression.

2. Procédé selon la revendication 1, dans lequel le chauffage de la plaque est réalisé hors du moule de compression.

3. Procédé selon la revendication 2, qui comprend :
- l'introduction de la plaque dans un four préalablement chauffé à la température θ₁ et le maintien de la plaque dans le four ainsi chauffé pendant 10 minutes à 60 minutes ; puis
- le transfert de la plaque dans le moule de compression, le moule de compression étant préalablement chauffé à une température θ₂ au moins égale à 200°C mais inférieure à la température de fusion du polytétrafluoroéthylène fritté, et la compression de la plaque dans le moule de compression ainsi chauffé pendant 5 minutes à 30 minutes, sous une pression allant de 50 MPa à 150 MPa.

4. Procédé selon la revendication 1, dans lequel le chauffage de la plaque est réalisé dans le moule de compression.

5. Procédé selon la revendication 4, qui comprend :
- l'introduction de la plaque dans le moule de compression, le moule de compression étant préalablement chauffé à la température θ₁, et la compression de la plaque dans le moule de compression ainsi chauffé sous une pression allant de 50 MPa à 150 MPa ; puis
- le refroidissement du moule de compression et le maintien de la plaque sous compression jusqu'à ce que la température du moule de compression soit inférieure à la température de fusion du PTFE fritté.

6. Procédé de fabrication d'une pièce en un polytétrafluoroéthylène fritté et restructuré en forme de film dont au moins une partie n'est pas plane à partir d'une plaque en un polytétrafluoroéthylène fritté et restructuré, lequel procédé comprend la mise en forme de la plaque par un procédé tel que défini dans l'une quelconque des revendications 1 à 5.

7. Procédé selon la revendication 6, dans lequel la pièce présente une épaisseur inférieure à l'épaisseur de la plaque.

8. Procédé selon la revendication 6 ou la revendication 7, dans lequel la pièce comprend une partie périphérique plane ou sensiblement plane et une partie centrale en forme de dôme.

9. Procédé selon la revendication 8, dans lequel la partie périphérique de la pièce comprend, sur au moins l'une de ses faces, un bourrelet annulaire, coaxial avec le dôme.

10. Procédé selon la revendication 8 ou la revendication 9, dans lequel la pièce comprend un pion qui est intégré au sommet du dôme.

11. Procédé selon l'une quelconque des revendications 6 à 10 lorsqu'elles dépendent de la revendication 3, dans lequel :
- le four est préalablement chauffé à une température allant de 365°C à 375°C et la plaque est maintenue dans le four ainsi chauffé pendant 10 minutes à 15 minutes ; et
- le moule de compression est préalablement chauffé à une température allant de 240°C à 280°C et la plaque est comprimée dans le moule de compression ainsi chauffé pendant 5 minutes à 10 minutes, sous une pression allant de 100 MPa à 150 MPa.

12. Procédé selon l'une quelconque des revendications 6 à 10 lorsqu'elles dépendent de la revendication 5, dans lequel :
- le moule de compression est préalablement chauffé à une température allant de 330°C à 350°C et la plaque est comprimée dans le moule de compression ainsi chauffé sous une pression allant de 100 MPa à 150 MPa ; et
- la plaque est maintenue sous compression au moins jusqu'à ce que la température du moule de compression atteigne 200°C.

## Patentansprüche

1. Verfahren zum Formen einer Platte aus einem gesinterten und restrukturierten Polytetrafluorethylen, wobei das Verfahren umfasst:
- Erhitzen der Platte auf eine Temperatur θ₁, die zumindest gleich der Schmelztemperatur von gesintertem Polytetrafluorethylen ist; und
- Formen der so erhitzten Platte durch Pressen in einer Pressform.

2. Verfahren nach Anspruch 1, wobei das Erhitzen der Platte außerhalb der Pressform erfolgt.

3. Verfahren nach Anspruch 2, umfassend:
- Einführen der Platte in einen auf die Temperatur θ₁ vorerhitzten Ofen und Halten der Platte in dem so erhitzten Ofen für 10 Minuten bis 60 Minuten; dann
- Überführen der Platte in die Pressform, wobei die Pressform auf eine Temperatur θ₂ vorerhitzt wird, die zumindest gleich 200 °C, jedoch niedriger als die Schmelztemperatur von gesintertem Polytetrafluorethylen ist, und Pressen der Platte in der so erhitzten Pressform für 5 Minuten bis 30 Minuten unter einem Druck von 50 MPa bis 150 MPa.

4. Verfahren nach Anspruch 1, wobei das Erhitzen der Platte in der Pressform erfolgt.

5. Verfahren nach Anspruch 4, umfassend:
- Einführen der Platte in die Pressform, wobei die Pressform auf die Temperatur θ₁ vorerhitzt wird, und Pressen der Platte in der so erhitzten Pressform unter einem Druck von 50 MPa bis 150 MPa; dann
- Abkühlen der Pressform und Halten der Platte unter Druck solange, bis die Temperatur der Pressform niedriger als die Schmelztemperatur von gesintertem PTFE ist.

6. Verfahren zum Herstellen eines Teils aus einem gesinterten und restrukturierten Polytetrafluorethylen in Folienform, wovon zumindest ein Abschnitt nicht eben ist, aus einer Platte aus einem gesinterten und restrukturierten Polytetrafluorethylen, wobei das Verfahren das Formen der Platte durch ein Verfahren nach einem der Ansprüche 1 bis 5 umfasst.

7. Verfahren nach Anspruch 6, wobei das Teil eine Materialstärke aufweist, die geringer als die Materialstärke der Platte ist.

8. Verfahren nach Anspruch 6 oder Anspruch 7, wobei das Teil einen ebenen bzw. im Wesentlichen ebenen Umfangsabschnitt und einen kuppelförmigen Mittelabschnitt enthält.

9. Verfahren nach Anspruch 8, wobei der Umfangsabschnitt des Teils auf zumindest einer seiner Seiten eine ringförmige Wulst aufweist, die koaxial zu der Kuppel verläuft.

10. Verfahren nach Anspruch 8 oder Anspruch 9, wobei das Teil einen Zapfen enthält, der in die Spitze der Kuppel integriert ist.

11. Verfahren nach einem der Ansprüche 6 bis 10 in Abhängigkeit von Anspruch 3, wobei
- der Ofen auf eine Temperatur von 365 °C bis 375 °C vorerhitzt wird und die Platte in dem so erhitzten Ofen für 10 bis 15 Minuten gehalten wird; und
- die Pressform auf eine Temperatur von 240 °C bis 280 °C vorerhitzt wird und die Platte in der so erhitzten Pressform für 5 Minuten bis 10 Minuten unter einem Druck von 100 MPa bis 150 MPa gepresst wird.

12. Verfahren nach einem der Ansprüche 6 bis 10 in Abhängigkeit von Anspruch 5, wobei
- die Pressform auf eine Temperatur von 330 °C bis 350 °C vorerhitzt wird und die Platte in der so erhitzten Pressform unter einem Druck von 100 MPa bis 150 MPa gepresst wird; und
- die Platte zumindest solange gepresst gehalten wird, bis die Temperatur der Pressform 200 °C erreicht.

## Claims

1. Method for shaping a plate made of a sintered and restructured polytetrafluoroethylene, which method comprises:
- heating the plate to a temperature θ₁ at least equal to the melting temperature of a sintered polytetrafluoroethylene; and
- shaping the thereby heated plate by compression in a compression mold.

2. Method according to claim 1, wherein the heating of the plate is carried out outside the compression mold.

3. Method according to claim 2, which comprises:
- introducing the plate in an oven heated beforehand to the temperature θ₁ and maintaining the plate in the thereby heated oven for 10 minutes to 60 minutes; and then
- transferring the plate into the compression mold, the compression mold being heated beforehand to a temperature θ₂ at least equal to 200°C but less than the melting temperature of the sintered polytetrafluoroethylene, and compressing the plate in the thereby heated compression mold for 5 minutes to 30 minutes, under a pressure ranging from 50 MPa to 150 MPa.

4. Method according to claim 1, wherein the heating of the plate is carried out inside the compression mold.

5. Method according to claim 4, which comprises:
- introducing the plate in the compression mold, the compression mold being heated beforehand to the temperature θ₁, and compressing the plate in the thereby heated compression mold under a pressure ranging from 50 MPa to 150 MPa; and then
- cooling the compression mold and maintaining the plate under compression until the temperature of the compression mold is less than the melting temperature of the sintered PTFE.

6. Method for manufacturing a part made of a sintered and restructured polytetrafluoroethylene as a film, at least one portion of which is not planar, from a plate made of a sintered and restructured polytetrafluoroethylene, which method comprises the shaping of the plate by a method as defined in any of claims 1 to 5.

7. Method according to claim 6, wherein the part has a smaller thickness than the thickness of the plate.

8. Method according to claim 6 or claim 7, wherein the part comprises a planar or substantially planar peripheral portion and a dome-shaped central portion.

9. Method according to claim 8, wherein the peripheral portion of the part comprises, on at least one of its faces, a ring-shaped bulge, coaxial with the dome.

10. Method according to claim 8 or claim 9, wherein the part comprises a pin which is integrated to the top of the dome.

11. Method according to any of claims 6 to 10, when they depend on claim 3, wherein:
- the oven is heated beforehand to a temperature ranging from 365°C to 375°C and the plate is maintained in the thereby heated oven for 10 minutes to 15 minutes; and
- the compression mold is heated beforehand to a temperature ranging from 240°C to 280°C and the plate is compressed in the thereby heated compression mold for 5 minutes to 10 minutes, under a pressure ranging from 100 MPa to 150 MPa.

12. Method according to any of claims 6 to 10 when they depend on the claim 5, wherein:
- the compression mold is heated beforehand to a temperature ranging from 330°C to 350°C and the plate is compressed in the thereby heated compression mold under a pressure ranging from 100 MPa to 150 MPa; and
- the plate is maintained under compression at least until the temperature of the compression mold attains 200°C.
